# EUROPÄISCHE PATENTSCHRIFT

(11) **EP 1 814 920 B1**
(45) Veröffentlichungstag und Bekanntmachung des Hinweises auf die Patenterteilung: **23.02.2011**
(21) Anmeldenummer: 05803110.5
(22) Anmeldetag: 12.11.2005
(51) Int. Cl.: C08F 2/26

(54) **VERWENDUNG VON FETTALKOHOLPOLYGLYKOLETHERSULFATEN FÜR DIE EMULSIONSPOLYMERISATION**
USE OF FATTY ALCOHOL POLYGLYCOL ETHER SULFATES FOR EMULSION POLYMERISATION
UTILISATION DE SULFATES D'ETHERS POLYGLYCOLIQUES D'ALCOOLS GRAS POUR LA POLYMERISATION EN EMULSION

(30) Priorität: 25.11.2004 DE 102004056853
(43) Veröffentlichungstag der Anmeldung: 08.08.2007
(73) Patentinhaber: Cognis IP Management GmbH, 40589 Düsseldorf (DE)
(72) Erfinder: HELD, Uwe, 42553 Velbert (DE); BREUER, Wolfgang, 41352 Korschenbroich (DE); MAUSBERG, Thomas, 40699 Erkrath (DE)
(86) Internationale Anmeldenummer: PCT/EP2005/012148
(87) Internationale Veröffentlichungsnummer: WO 2006/056332

(56) Entgegenhaltungen:
- WO-A-03/037495
- WO-A-03/054026
- GB-A- 842 672
- GB-A- 1 292 883

## Beschreibung

### Gebiet der Erfindung

Die Erfindung betrifft die Verwendung von speziellen Fettalkoholpolyglykolethersulfaten als Emulgatoren für die Emulsionspolymerisation.

### Stand der Technik

Alkylpolyoxyethylen- und Alkylphenolpolyoxyethylen-Sulfate sind bekannte Tenside, die unter anderem auch für die Stabilisierung von Polymerdispersionen geeignet sind. Sie werden auf Basis nativer und petrochemischer Rohstoffe hergestellt.

WO-A-03/037495 beschreibt Zusammensetzungen, die erhältlich sind durch Umsetzung eines Gemisches von (a) 20-80 Gew.-% ein oder mehrerer Fettalkohole mit 8 bis 22 C-Atomen und (b) 20-80 Gew.-% ein oder mehrerer Ringöffnungsprodukte von 1,2-Epoxyalkanen mit 8 bis 18 C-Atomen mit Ethylenglykol, mit Ethylenoxid, mit der Maßgabe, daß die Menge des eingesetzten Ethylenoxids 5 bis 100 mol bezogen auf ein mol an freien OH=Gruppen, die in der Summe der eingesetzten Verbindungen a) und b) vorhanden sind, beträgt. Diese Zusammensetzungen, die Mischungen nichtionischer Tenside sind, eignen sich als Emulgatoren bei der Emulsionspolymerisation.

### Beschreibung der Erfindung

Aufgabe der vorliegenden Erfindung war es, Zusammensetzungen bereitzustellen, die sich als Emulgatoren für die Emulsionspolymerisation eignen. Diese Zusammensetzungen sollten frei von organischen Lösungsmitteln und wasserlöslich sein. Die Löslichkeit in Wasser sollte dabei möglichst hoch sein, so daß diese Zusammensetzungen in der Angebotsform stabiler wässriger Konzentrate bereitgestellt werden können. Die Zusammensetzungen sollten sich darüber hinaus durch gute ökotoxikologische Eigenschaften auszeichnen.

Des weiteren sollten sich die Zusammensetzungen durch verbesserte Eigenschaften in der Polymerisation und in der Anwendung der erhaltenen Latices auszeichnen. Die Verbesserung zielte dabei auf eine erhöhte Stabilisation während des Polymerisationsprozesses und einer Verbesserung der Stabilitäten der Dispersionen gegenüber Elektrolyten und Temperatureinflüssen. Auch sollte die Verträglichkeit der Dispersion gegenüber Kalziumcarbonat, zum Beispiel für Anwendungen im Bereich der Papiertechnik, verbessert werden.

Gegenstand der vorliegenden Erfindung ist die Verwendung von Zusammensetzungen, die erhältlich sind durch Umsetzung eines Gemisches von
a) 20-80 Gew.-% ein oder mehrerer Fettalkohole mit 8 bis 22 C-Atomen und
b) 20-80 Gew.-% ein oder mehrerer Ringöffnungsprodukte von 1,2-Epoxyalkanen mit 8 bis 18 C-Atomen mit Ethylenglykol
mit Ethylenoxid,
mit der Maßgabe, daß die Menge des eingesetzten Ethylenoxids 5 bis 100 mol bezogen auf ein mol an freien OH-Gruppen, die in der Summe der eingesetzten Verbindungen a) und b) vorhanden sind, beträgt,
nebst anschließender Sulfatierung des dabei erhaltenen Zwischenproduktes, als Emulgatoren bei der Emulsionspolymerisation.

Die erfindungsgemäßen Zusammensetzungen sind in einem 2-stufigen Prozess erhältlich. Dabei beinhaltet der erste Schritt eine Umsetzung eines Gemisches der beiden Substanzklassen (a) und (b) mit Ethylenoxid. Die dabei resultierenden Zwischenprodukte werden in einem zweiten Schritt sulfatiert.

Es sei angemerkt, daß die Zwischenprodukte des ersten Schrittes in der oben zitierten WO-A-03/037495 offenbart sind. Es sei ferner angemerkt, daß unter Sulfatierung im Rahmen der vorliegenden Erfindung - ganz im Sinne des üblichen Gebrauchs durch den Fachmann - die Überführung der alkoholischen -OH-Gruppen des genannten Zwischenproduktes in (anionische) Sulfatgruppen -OSO₃(M^{w})_{1/w} zu verstehen ist, wobei M für ein Kation steht und w die Wertigkeit des Kations bedeutet. Vorzugsweise handelt es sich bei M um Lithium, Natrium oder Kalium. Die Gruppe -OSO₃Na ist als Sulfatgruppe besonders bevorzugt.

Die Species der erfindungsgemäßen Zusammensetzungen gehören strukturell der Klasse der Fettalkoholpolyglykolethersulfate an. Beispiele für solche Species sind:

CH3-(CH₂)_{11/13}-O-(CH₂-CH₂-O)_{approx.6.5}-SO₃Na

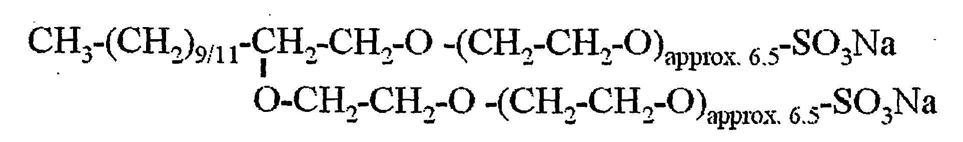

### Zu den Substanzen (a)

Fettalkohole mit 8 bis 22 C-Atomen sind dem Fachmann bekannt. Sie können einzeln oder im Gemisch eingesetzt werden. Bevorzugt sind dabei weitgehend gesättigte und ungesättigte Fettalkohole, worunter solche Fettalkohole zu verstehen sind, deren Jodzahl unterhalb von 60 liegt. Als ganz besonders bevorzugt kommen folgende Fettalkohole bzw. deren Mischungen untereinander in Betracht: Laurinalkohol, Myristinalkohol, Cetylalkohol, Stearylalkohol und Oleylalkohol

### Zu den Substanzen (b)

Ringöffnungsprodukte von 1,2-Epoxyalkanen mit 8 bis 18 C-Atomen mit Ethylenglykol sind auf einfache Weise zugänglich, indem man die gewünschten Epoxyalkane mit Ethylenglykol im Sinne einer Öffnung von Oxiranringen umsetzt.

### Zur Herstellung der Zwischenprodukte

Die (gemeinsame) Ethoxylierung der genannten beiden Substanzklassen (a) und (b) erfolgt bei erhöhter Temperatur und erhöhtem Druck in Gegenwart von geeigneten Alkoxylierungskatalysatoren. Die Wahl des Alkoxylierungskatalysators beeinflußt die Breite des Spektrums von Anlagerungsprodukten, die sogenannte Homologenverteilung, des Ethylenoxids an den Alkohol. So werden in Gegenwart der katalytisch wirkenden Alkalimetallalkoholate wie Natriumethylat Anlagerungsprodukte mit breiter Homologenverteilung erhalten, während beispielsweise in Gegenwart von Hydrotalcit als Katalysator eine stark eingeengte Homologenverteilung (sogenannte "narrow range"-Produkte) erfolgt.

### Zu den erfindungsgemäßen Zusammensetzungen

Die erfindungsgemäßen Zusammensetzungen können als alleinige Emulgatoren (Primäremulgatoren) bei der Emulsionspolymerisation eingesetzt werden. Es ist jedoch auch möglich, die erfindungsgemäßen Zusammensetzungen zusammen mit (weiteren) anionaktiven oder nichtionischen oder kationaktiven Emulgatoren (oder deren Mischungen) einzusetzen.

Die erfindungsgemäßen Zusammensetzungen werden bei der Emulsionspolymerisation vorzugsweise in der Form von Tensidkonzentraten als Emulgatoren in einer Menge von 0,2 bis 10 Gew.-%, vorzugsweise von 0,5 bis 5 Gew.-% und insbesondere von 0,5 bis 3 Gew.-% - berechnet als Tensidkonzentrat und bezogen auf die Polymerisationsmischung - eingesetzt.

Ein weiterer Gegenstand der Erfindung ist ein gießbares, flüssiges Tensidkonzentrat, gekennzeichnet durch einen Gehalt von 20 bis 70 Gew.-% an den oben genannten erfindungsgemäßen Zusammensetzungen und 30 bis 80 Gew.-% Wasser.

Die erfindungsgemäßen gießbaren, flüssigen Tensidkonzentrate bestehen aus Tensidmischung und Wasser. Die Tensidmischung ist im erfindungsgemäßen Tensidkonzentrat in Mengen von 20 bis 70 Gew.-%, vorzugsweise in Mengen von 20 bis 50 Gew.-% - bezogen auf das gesamte Tensidkonzentrat - enthalten.

Die erfindungsgemäßen Tensidkonzentrate sind über weite Temperaturbereiche flüssig und gießbar. Insbesondere sind die Tensidkonzentrate bei 20 °C flüssig und gießbar. Die untere Grenze des Temperaturbereiches, bei dem die erfindungsgemäßen Tensidkonzentrate noch flüssig und gießbar sind, variiert mit ihrer Zusammensetzung. Prinzipiell kann man sagen, daß die erfindungsgemäßen Tensidkonzentrate über ihren Erstarrungspunkten und vorzugsweise etwa 3 °C über ihren Erstarrungspunkten gießbar sind. Die erfindungsgemäßen Tensidkonzentrate zeigen Viskositätswerte nach Höppler bei 20 °C (DIN 53015) im Bereich von 0,1 bis 3 Pas.

Die erfindungsgemäßen Zusammensetzungen eignen sich generell zur Verwendung als Emulgatoren bei der Herstellung wäßriger Latices, worunter wäßrige Emulsionen oder Dispersionen von Polymeren und/oder Copolymeren verstanden werden, die üblicherweise auf dem Wege der Emulsionspolymerisation zugänglich sind. Die Natur der Polymeren und Copolymeren in diesen wäßrigen Latices unterliegt an sich keinen besonderen Beschränkungen. Besonders bevorzugt sind jedoch Polymere bzw. Copolymere auf Basis folgender Monomer-Bausteine: Acrylsäure, Acrylsäureester, Butadien, Methacrylsäure, Methacrylsäureester, Styrol, Vinylacetat und Versaticsäurevinylester.

Die erfindungsgemäßen Zusammensetzungen verleihen wäßrigen Latices insbesondere eine verbesserte Stabilität während des Herstellungsprozesses. Dies äussert sich in einem deutlich geringeren Koagulatanteil nach erfolgter Polymerisation im Vergleich zu Dispersionen, die unter Verwendung herkömmlicher Tenside der Species Fettalkoholethersulfat hergestellt wurden.

### Beispiele

### Eingesetzte Substanzen:

Disponil ELS 6,5: Fettalkoholpolyglykolether, hergestellt durch Umsetzung eines Gemisches von 70 Gew.-% eines Fettalkohols mit 10 bis 16 C-Atomen und 30 Gew.-% eines Ringöffnungsproduktes von 1,2-Epoxyalkanen mit 12 und 14 C-Atomen mit Ethylenglykol, mit Ethylenoxid, mit der Maßgabe, daß die Menge des eingesetzten Ethylenoxids 6,5 mol bezogen auf ein mol an freien OH-Gruppen, die in der Summe der eingesetzten Verbindungen a) und b) vorhanden sind, beträgt. (Handelsprodukt der Firma Cognis Deutschland GmbH & Co. KG).
Oleum: Oleum mit einem Gehalt an SO₃ von 65 Gew.-%.

### Beispiel 1

### Erfindungsgemäßes Fettalkoholpolyglykolethersulfat (50 Gew.-% Aktivsubstanz in Wasser)

### Rohstoffe:

2046,0 g Disponil ELS 6,5
657,5 g Oleum (65% SO₃ entspricht 427,4 g SO₃)
355,9 g Natriumhydroxid (50 %-ig in Wasser)
2241,9 g demineralisiertes Wasser

### Durchführung:

2046,0 g Disponil ELS 6,5 wurden mit 427,4 g SO₃, das durch Verdampfen von 657,5 g Oleum erzeugt wurde, in einem Rohrreaktor im Gleichstrom-Verfahren zur Reaktion gebracht. Die Förderrate entsprach dabei 10 g/min des Disponil ELS 6,5, sowie 3,21 g/min Oleum. Die Reaktortemperatur wurde auf 30°C geregelt. Das entstehende saure Zwischenprodukt wurde in einem Vorlagebehälter, der ein Gemisch aus 355,9 g 50%iger Natronlauge und 2241,9 g demineralisiertes Wasser enthielt, unter Rühren neutralisiert.

### Anwendungsbeispiele

### I. Verbesserung der Stabilität während des Herstellungsprozesses von wässrigen Polymerdispersionen

Die nachfolgenden Beispiele 2 bis 5 veranschaulichen die Herstellung einer Polymerdispersion D1 auf Basis Vinylacetat und VeoVa10, geeignet als Bindemittel für hoch- und niedrig gefüllte Systeme. Bei VeoVa10 (Fa. Shell) handelt es sich um den Vinylester von Versatic 10, einer synthetisch hergestellten verzweigten Monocarbonsäure.

Als Emulgatoren A bis D wurden eingesetzt:

| | |
|---|---|
| Emulgator A: | Fettalkoholethersulfat, Na-Salz, durchschnittlich 4 EO-Einheiten je OH-Gruppe des ethoxylierten Alkohols. |
| Emulgator B: | Erfindungsgemäßes Fettalkoholethersulfat, Na-Salz, durchschnittlich 6,5 EO-Einheiten je OH-Gruppe des ethoxylierten Alkohols. |
| Emulgator C: | Fettalkoholethersulfat, Na-Salz, durchschnittlich 30 EO-Einheiten je OH-Gruppe des ethoxylierten Alkohols. |
| Emulgator D: | Erfindungsgemäßes Fettalkoholethersulfat, Na-Salz, durchschnittlich 30 EO-Einheiten je OH-Gruppe des ethoxylierten Alkohols. |

Die Angaben der Menge an den eingesetzten Emulgatoren A bis D wurden jeweils auf Aktivsubstanz an dem jeweiligen Emulgator bezogen. Bei Emulgator B handelt es sich um die Verbindung, deren Herstellung in Beispiel 1 beschrieben wurde. Bei Emulgator D um eine analog hergestellt Substanz, jedoch unter Einsatz von 30 statt 6,5 EO.

### Beispiel 2 (zum Vergleich)

### Eingesetzte Zusammensetzungen:

### Vorlage:

| | |
|---|---|
| Emulgator A | 0,16 g |
| Wasser, vollentsalzt | 151,00 g |

### Zulauf 1:

| | |
|---|---|
| Kaliumperoxodisulfat | 1,20 g |
| Wasser, vollentsalzt | 30,00 g |

### Zulauf 2:

| | |
|---|---|
| Emulgator A | 4,03 g |
| di-Natriumtetraborat-decahydrat | 0,51 g |
| Kaliumperoxodisulfat | 0,28 g |
| Wasser, vollentsalzt | 263, 79 g |
| Methacrylsäure | 5,37 g |
| VeoVa 10 | 26,83 g |
| Butylacrylat | 134,15 g |
| Vinylacetat | 370,25 g |

### Zulauf 3:

| | |
|---|---|
| Isoascorbinsäure | 0,27 g |
| Wasser, vollentsalzt | 2,39 g |

### Zulauf 4:

| | |
|---|---|
| tert.-Butylhydroperoxid (70%ig) | 0,27 g |
| Wasser, vollentsalzt | 2,39 g |

### Neutralisation:

| | |
|---|---|
| Ammoniaklösung (12,5%ig) | 7,11 g |

### Durchführung:

Die Reaktorvorlage wurde in einem 2-1-Polymerisationsgefäß, das mit, einem Ankerrührer, Rückflußkühler, Temperaturmessung und 2 Zuläufen ausgestattet war, in einer Stickstoffatmosphäre bei einer Manteltemperatur von 80 °C auf eine Temperatur von 70 °C aufgeheizt. Bei dieser Temperatur wurde Zulauf 1 zügig zugegeben. 3 Minuten nach erfolgter Zugabe wurde mit der Dosierung von Zulauf 2 begonnen. Die Dosierzeit für Zulauf 2 betrug dabei 180 Minuten. Die Manteltemperatur wurde 5 Minuten nach Beginn der Dosierung von Zulauf 2 auf 70 °C herabgesetzt. Im Anschluss an die Dosierung wurde für 40 Minuten nachpolymerisiert. Es erfolgte die zügige Zugabe von Zulauf 3. Fünf Minuten später folgte die Zugabe von Zulauf 4. Nach weiteren 15 Minuten Nachpolymerisation wurde der Ansatz auf 35 °C abgekühlt und mit halbkonzentriertem Ammoniak neutralisiert. Es wurde über ein Sieb mit der Maschenweite 80 Um filtriert und der Koagulatanteil bestimmt.

### Beispiel 3 (erfindungsgemäß)

Beispiel 2 wurde wiederholt, jedoch wurde Emulgator A durch Emulgator B ersetzt.

### Beispiel 4 (zum Vergleich)

Beispiel 2 wurde wiederholt, jedoch wurde Emulgator A durch Emulgator C ersetzt.

### Beispiel 5 (erfindungsgemäß)

Beispiel 2 wurde wiederholt, jedoch wurde Emulgator A durch Emulgator D ersetzt.

Ergebnisse: Der Koagulatanteil der Dispersionen gemäß den Beispielen 2 bis 5 kann Tabelle 1 entnommen werden:

**Tabelle 1**

| | Beispiel 2 | **Beispiel 3** | | Beispiel 4 | **Beispiel 5** |
|---|---|---|---|---|---|
| Siebkoagulat in % | 1,31 | 0,11 | | 22,84 | 2,47 |
| Gesamtkoagulat in % | 7,14 | 1,53 | | 23,70 | 2,80 |

### II. Verbesserung der Elektrolytbeständigkeit von wässrigen Polymerdisperionen

Die nachfolgenden Beispiele 6 und 7 veranschaulichen die Herstellung einer Polymerdispersion D2 auf Basis Vinylacetat / VeoVa10, geeignet als Bindemittel für hoch- und niedrig gefüllte Systeme.

Als Emulgatoren A und B wurden eingesetzt:

| | |
|---|---|
| Emulgator A: | Fettalkoholethersulfat, Na-Salz, durchschnittlich 4 EO-Einheiten je OH-Gruppe des ethoxylierten Alkohols. |
| Emulgator B: | Erfindungsgemäßes Fettalkoholethersulfat, Na-Sälz, durchschnittlich 6,5 EO-Einheiten je OH-Gruppe des ethoxylierten Alkohols. |

Die Angaben der Menge an den eingesetzten Emulgatoren A und B wurde jeweils auf Aktivsubstanz an dem jeweiligen Emulgator bezogen. Bei Emulgator B handelt es sich um die Verbindung, deren Herstellung in Beispiel 1 bechrieben wurde.

Die beiden Beispiele 6 und 7 wurden jeweils in zwei Varianten durchgeführt.

### Beispiel 6 (zum Vergleich):

### Eingesetzte Zusammensetzungen:

| | Variante 1) | Variante 2) |
|---|---|---|
| Vorlage: | | |
| Emulgator A | 0,27 g | 0,54 g |
| Wasser, vollentsalzt | 150,70 g | 150,62 g |

| Zulauf 1: | | |
|---|---|---|
| Kaliumperoxodisulfat | 1,20 g | 1,20 g |
| Wasser, vollentsalzt | 30,00 g | 30,00 g |
| | | |

| Zulauf 2: | | |
|---|---|---|
| Emulgator A | 6,00 g | 11,97 g |
| di-Natriumtetraborat-decahydrat | 0,51 g | 0,51 g |
| Kaliumperoxodisulfat | 0,28 g | 0,28 g |
| Wasser, vollentsalzt | 262,01 g | 255,85 g |
| Methacrylsäure | 5,37 g | 5,37 g |
| VeoVa 10 | 26,83 g | 26,83 g |
| Butylacrylat | 134,15 g | 134,15 g |
| Vinylacetat | 370,25 g | 370,25 g |
| | | |

| Zulauf 3: | | |
|---|---|---|
| Isoascorbinsäure | 0,27 g | 0,27 g |
| Wasser, vollentsalzt | 2,39 g | 2,39 g |
| | | |

| Zulauf 4: | | |
|---|---|---|
| tert.-Butylhydroperoxid (70%ig) | 0,27 g | 0,27 g |
| Wasser, vollentsalzt | 2,39 g | 2,39 g |
| | | |

| Neutralisation: | | |
|---|---|---|
| Ammoniaklösung (12,5%ig) | 7,11 g | 7,11 g |

### Durchführung:

Die Reaktorvorlage wurde in einem 2-1-Polymerisationsgefäß, das mit einem Ankerrührer, Rückflußkühler, Temperaturmessung und 2 Zuläufen ausgestattet war, in einer Stickstoffatmosphäre bei einer Manteltemperatur von 80 °C auf eine Temperatur von 70 °C aufgeheizt. Bei dieser Temperatur wurde Zulauf 1 zügig zugegeben. 3 Minuten nach erfolgter Zugabe wurde mit der Dosierung von Zulauf 2 begonnen. Die Dosierzeit für Zulauf 2 betrug dabei 180 Minuten. Die Manteltemperatur wurde 5 Minuten nach Beginn der Dosierung von Zulauf 2 auf 70 °C herabgesetzt. Im Anschluss an die Dosierung wurde für 40 Minuten nachpolymerisiert. Es erfolgte die zügige Zugabe von Zulauf 3. Fünf Minuten später folgte die Zugabe von Zulauf 4. Nach weiteren 15 Minuten Nachpolymerisation wurde der Ansatz auf 35°C abgekühlt und mit halbkonzentriertem Ammoniak neutralisiert. Es wurde über ein Sieb mit der Maschenweite 80 µm filtriert und der Koagulatanteil bestimmt.

### Beispiel 7 (erfindungsgemäß)

Beispiel 6 wurde wiederholt, jedoch wurde Emulgator A durch Emulgator B ersetzt.

Ergebnisse: Der Koagulatanteil der Dispersionen gemäß den Beispielen 6 und 7 kann Tabelle 2 entnommen werden.

### Elektrolytstabilität

Tabelle 2 veranschaulicht darüber hinaus die Effekte, die bei Zugabe verschiedener Salzlösungen zu den Dispersionen beobachtet wurden. Es handelt sich hierbei um die Ergebnisse der Prüfung auf Elektrolytstabilität. Hierzu wurden bei den jeweils zwei Varianten der Dispersionen gemäß den Beispielen 6 und 7 folgende Untersuchungen durchgeführt:

Jeweils 10 ml der Dispersion wurde mit je 10 ml einer wässrigen Salzlösung gemäß Tabelle 2 vermischt. Blieb die Dispersion dabei stabil (visuelle Kontrolle), wurde also Elektrolytstabilität erzielt, wurde dies in Tabelle 2 mit einem + vermerkt. Blieb die Dispersion nicht stabil (visuelle Kontrolle), wurde dies mit einem - vermerkt.

**Tabelle 2**

| | Variante 1) | | | Variante 2) | |
|---|---|---|---|---|---|
| | Beispiel 6 | **Beispiel 7** | | Beispiel 6 | **Beispiel 7** |
| Siebkoagulat in % | 0,04 | 0,02 | | 0,02 | 0,01 |
| Gesamtkoagulat in % | 0,24 | 0,12 | | 0,19 | 0,15 |
| 1 % NaCl-Lösung | + | + | | + | + |
| 10 % NaCl-Lösung | - | - | | + | + |
| 1 % CaCl₂-Lösung | - | + | | + | + |
| 1 % Al₂(SO4)₃-Lösung | - | + | | - | + |

Bei den Dispersionen auf Basis des erfindungsgemäßen Emulgators (also den Dispersionen gemäß Beispiel 7) waren sowohl der Siebkoagulatgehalt als auch der Gesamtkoagulatgehalt als auch die Elektolytstabilität signifikant besser als bei den Dispersionen gemäß Vergleichsbeispiel 6.

## Patentansprüche

1. Verwendung von Zusammensetzungen, die erhältlich sind durch Umsetzung eines Gemisches von
a) 20-80 Gew.-% ein oder mehrerer Fettalkohole mit 8 bis 22 C-Atomen und
b) 20-80 Gew.-% ein oder mehrerer Ringöffnungsprodukte von 1,2-Epoxyalkanen mit 8 bis 18 C-Atomen mit Ethylenglykol
mit Ethylenoxid,
mit der Maßgabe, daß die Menge des eingesetzten Ethylenoxids 5 bis 100 mol bezogen auf ein mol an freien OH-Gruppen, die in der Summe der eingesetzten Verbindungen a) und b) vorhanden sind, beträgt,
nebst anschließender Sulfatierung des dabei erhaltenen Zwischenproduktes,
als Emulgatoren bei der Emulsionspolymerisation.

2. Gießbares, flüssiges Tensidkonzentrat, **gekennzeichnet durch** einen Gehalt von 20 bis 70 Gew.-% an den Zusammensetzungen gemäß Anspruch 1 und 30 bis 80 Gew.-% Wasser.

## Claims

1. The use of compositions obtainable by reaction of a mixture of
a) 20 to 80% by weight of one or more fatty alcohols containing 8 to 22 carbon atoms and
b) 20 to 80% by weight of one or more ring opening products of 1,2-epoxyalkanes containing 8 to 18 carbon atoms with ethylene glycol
with ethylene oxide,
with the proviso that the quantity of ethylene oxide used is between 5 and 100 mol per mol free OH groups present in the sum of the compounds a) and b) used, and subsequent sulfation of the intermediate product obtained as emulsifiers for emulsion polymerization.

2. Pourable liquid surfactant concentrate, **characterized by** a content of 20 to 70% by weight of the compositions claimed in claim 1 and 30 to 80% by weight water.

## Revendications

1. Utilisation de compositions qui peuvent être obtenues par réaction d'un mélange de
a) 20 à 80 % en poids d'un ou de plusieurs alcools gras de 8 à 22 atomes C et
b) 20 à 80 % en poids d'un ou de plusieurs produits d'ouverture de cycle de 1,2-époxyalcanes de 8 à 18 atomes C avec de l'éthylène glycol
avec de l'oxyde d'éthylène,
à condition que la quantité d'oxyde d'éthylène utilisé soit de 5 à 100 moles par rapport à une mole de groupes OH libres présents dans la somme des composés a) et b) utilisés,
et sulfatation ultérieure du produit intermédiaire obtenu,
en tant qu'émulsifiants lors de la polymérisation en émulsion.

2. Concentré tensioactif liquide versable, **caractérisé par** une teneur de 20 à 70 % en poids en compositions selon la revendication 1 et de 30 à 80 en poids d'eau.
